# EUROPEAN PATENT APPLICATION

(11) **EP 4 365 988 A1**
(43) Date of publication of application: **08.05.2024**
(21) Application number: 22832748.2
(22) Date of filing: 08.06.2022
(51) Int. Cl.: H01M 4/36, H01M 4/505, H01M 4/525

(54) **CATHODE ACTIVE MATERIAL FOR NON-AQUEOUS ELECTROLYTE SECONDARY BATTERY, AND NON-AQUEOUS ELECTROLYTE SECONDARY BATTERY**

(30) Priority: 30.06.2021 JP 2021108922
(71) Applicant: Panasonic Intellectual Property Management Co., Ltd., Osaka-shi, Osaka 540-6207 (JP)
(72) Inventor: SAITO Motoharu, Kadoma-shi, Osaka 571-0057 (JP); KOKUBU Takao, Kadoma-shi, Osaka 571-0057 (JP); OGASAWARA Takeshi, Kadoma-shi, Osaka 571-0057 (JP)
(74) Representative: Novagraaf International SA
(86) International application number: PCT/JP2022/023084
(87) International publication number: WO 2023/276591

(57) **Abstract**

The cathode active material for a non-aqueous electrolyte secondary battery according to one exemplary embodiment of the present invention includes a lithium-transition metal compound oxide containing, relative to a total molar amount of metallic elements except for Li, no less than 90 mol% at least one metallic element selected from Ni, Mn, Fe, and Al. The lithium-transition metal compound oxide comprises particles having a minor axis diameter of 0.5-6.0 µm, the particles having 2-10 crystal planes therein.

## Description

### TECHNICAL FIELD

The present disclosure relates to a positive electrode active material for a non-aqueous electrolyte secondary battery and a non-aqueous electrolyte secondary battery using the positive electrode active material.

### BACKGROUND ART

In a non-aqueous electrolyte secondary battery such as a lithium-ion battery, a positive electrode active material significantly affects battery performance such as input and output characteristics, a capacity, and durability. For the positive electrode active material, a lithium-transition metal composite oxide containing a metal element such as Ni, Co, Mn, and Al, and composed of secondary particles formed by aggregation of primary particles is commonly used. Since the positive electrode active materials have largely different properties depending on their compositions, particle shapes, and the like, there have been many investigations on various positive electrode active materials.

For example, Patent Literature 1 proposes a non-aqueous electrolyte secondary battery comprising a positive electrode having lithium composite oxide particles including Ni at greater than or equal to 80 mol% and less than 100 mol% relative to a total molar amount of metal elements excluding Li, wherein the lithium composite oxide particles are particles having a step-like structure in which greater than or equal to three of planes are stacked.

### CITATION LIST

### PATENT LITERATURE

PATENT LITERATURE 1: Japanese Unexamined Patent Application Publication No. 2020-511632

### SUMMARY

### TECHNICAL PROBLEM

In a non-aqueous electrolyte secondary battery, it is an important challenge to inhibit a decrease in a capacity with charge and discharge to improve durability. Although Patent Literature 1 describes an effect that may inhibit a decrease in charge-discharge cycle characteristics of the battery, investigation by the present inventors has consequently found a novel technique for improving the durability.

### SOLUTION TO PROBLEM

A positive electrode active material for a non-aqueous electrolyte secondary battery of an aspect of the present disclosure includes a lithium-transition metal composite oxide containing at least one metal element in an amount of greater than or equal to 90 mol% relative to a total molar amount of metal elements excluding Li, the at least one metal element selected from the group consisting of Ni, Mn, Fe, and Al, wherein the lithium-transition metal composite oxide is composed of particles having a breadth of greater than or equal to 0.5 µm and less than or equal to 6.0 µm, and the lithium-transition metal composite oxide has greater than or equal to two and less than or equal to ten of crystal planes inside the particle.

A non-aqueous electrolyte secondary battery of an aspect of the present disclosure comprises: a positive electrode including the above positive electrode active material; a negative electrode; and a non-aqueous electrolyte.

### ADVANTAGEOUS EFFECT OF INVENTION

According to the positive electrode active material according to the present disclosure, the durability of the non-aqueous electrolyte secondary battery may be improved. The non-aqueous electrolyte secondary battery using the positive electrode active material according to the present disclosure has, for example, a high capacity retention after a charge-discharge cycle and excellent cycle characteristics.

### BRIEF DESCRIPTION OF DRAWING

FIG. 1 is a sectional view of a non-aqueous electrolyte secondary battery of an example of an embodiment.
FIG. 2 is a view schematically illustrating cross sections of particles of a positive electrode active material of an example of an embodiment.
FIG. 3 is a scanning ion microscope (SIM) image of cross sections of particles of a positive electrode active material of Example 1.
FIG. 4 is a SIM image of cross sections of particles of a positive electrode active material of Example 2.
FIG. 5 is a graph indicating changes in capacity retentions with charge-discharge cycle of non-aqueous electrolyte secondary batteries of Examples and Comparative Example.

### DESCRIPTION OF EMBODIMENTS

As noted above, it is an important challenge to inhibit a decrease in a capacity with charge and discharge of a battery to improve durability. The present inventors have made intensive investigation to develop a positive electrode active material that contributes to improvement of the durability of the non-aqueous electrolyte secondary battery, and consequently found that the durability of the battery is remarkably improved by using, as a positive electrode active material, a lithium-transition metal composite oxide containing a predetermined metal element, being composed of particles having a breadth of greater than or equal to 0.5 µm and less than or equal to 6.0 µm, and having greater than or equal to two and less than or equal to ten of crystal planes inside the particle.

The positive electrode active material preferably includes the lithium-transition metal composite oxide at greater than or equal to 5% and less than or equal to 30% on a number basis, and the lithium-transition metal composite oxide is preferably composed of single particles having no grain boundary in the particles. In this case, the effect of improving the durability is more remarkable.

Hereinafter, an example of an embodiment of the positive electrode active material for a non-aqueous electrolyte secondary battery and a non-aqueous electrolyte secondary battery using the positive electrode active material according to the present disclosure will be described in detail with reference to the drawings. The present disclosure includes constitution of selectively combining a plurality of embodiments and modified examples described hereinafter.

Hereinafter, a cylindrical battery in which a wound electrode assembly 14 is housed in a bottomed cylindrical exterior housing can 16 will be exemplified, but the exterior of the battery is not limited to a cylindrical exterior housing can, and may be, for example, a rectangular exterior housing can (rectangular battery), a coin-shaped exterior housing can (coin battery), or an exterior constituted with laminated sheets including a metal layer and a resin layer (laminate battery). The electrode assembly may be a stacked electrode assembly in which a plurality of positive electrodes and a plurality of negative electrodes are alternately stacked with a separator interposed therebetween.

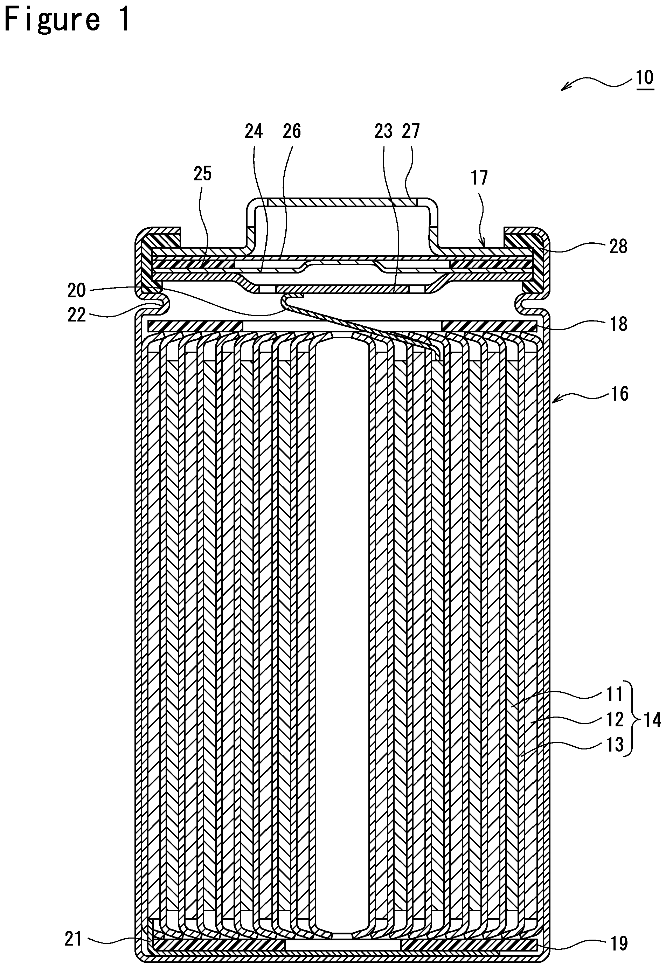

FIG. 1 is a sectional view of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, and a mixed solvent of two or more thereof, and the like are used, for example. The non-aqueous solvent may contain a halogen-substituted derivative in which hydrogen of these solvents is at least partially substituted with a halogen atom such as fluorine. An example of the non-aqueous solvent is ethylene carbonate (EC), ethyl methyl carbonate (EMC), dimethyl carbonate (DMC), a mixed solvent thereof, or the like. For the electrolyte salt, a lithium salt such as LiPF₆ is used, for example. The non-aqueous electrolyte is not limited to a liquid electrolyte, and may be a solid electrolyte.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed one size larger than the positive electrode 11. That is, the negative electrode 12 is formed longer than the positive electrode 11 in a longitudinal direction and in a width direction (short direction). The separators 13 are formed to be one size larger than at least the positive electrode 11, and two of them are disposed so as to sandwich the positive electrode 11, for example. Typically, a positive electrode lead 20 is connected to the positive electrode 11 of the electrode assembly 14 by welding or the like, and a negative electrode lead 21 is connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17, and thereby sealing inside the battery and insulation between the exterior housing can 16 and the sealing assembly 17 are ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper surface thereof. The sealing assembly 17 is fixed on the upper part of the exterior housing can 16 with the grooved portion 22 and with an end of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure of the battery increases due to abnormality in the battery, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the electrode assembly 14, specifically a positive electrode active material which constitutes the positive electrode 11, will be described in detail.

### [Positive Electrode]

The positive electrode 11 has a positive electrode core and a positive electrode mixture layer provided on a surface of the positive electrode core. The positive electrode core is a sheet-shaped current collector having higher conductivity than the positive electrode mixture layer. For the positive electrode core, a foil of a metal stable within a potential range of the positive electrode 11, such as aluminum and an aluminum alloy, a film in which such a metal is disposed on a surface layer thereof, and the like may be used. The positive electrode mixture layer includes a positive electrode active material, a binder, and a conductive agent, and is preferably provided on both surfaces of the positive electrode core. A thickness of the positive electrode mixture layer is larger than that of the positive electrode core, and as an example, greater than or equal to 50 µm and less than or equal to 150 µm on one side of the core.

The positive electrode mixture layer includes the positive electrode active material as a main component. A content percentage of the positive electrode active material 30 is preferably greater than or equal to 90 mass% relative to a mass of the positive electrode mixture layer, and as a preferable example, greater than or equal to 90 mass% and less than or equal to 98 mass%. Each of contents of the binder and the conductive agent is, for example, greater than or equal to 0.5 mass% and less than or equal to 5 mass% relative to the mass of the positive electrode mixture layer. The positive electrode 11 may be produced by, for example, applying a positive electrode mixture slurry including the positive electrode active material, the binder, the conductive agent, and the like on surfaces of the positive electrode core, and drying and subsequently compressing the coating to form the positive electrode mixture layers on both the surfaces of the positive electrode core.

An example of the binder included in the positive electrode mixture layer is a fluororesin such as polytetrafluoroethylene (PTFE) or polyvinylidene fluoride (PVdF), polyacrylonitrile (PAN), a polyimide resin, an acrylic resin, or a polyolefin resin. The positive electrode mixture layer preferably further includes a cellulose derivative such as carboxymethylcellulose (CMC) or a salt thereof, polyethylene oxide (PEO), and the like. Examples of the conductive agent included in the positive electrode mixture layer include carbon materials such as carbon black, acetylene black, Ketjenblack, and graphite.

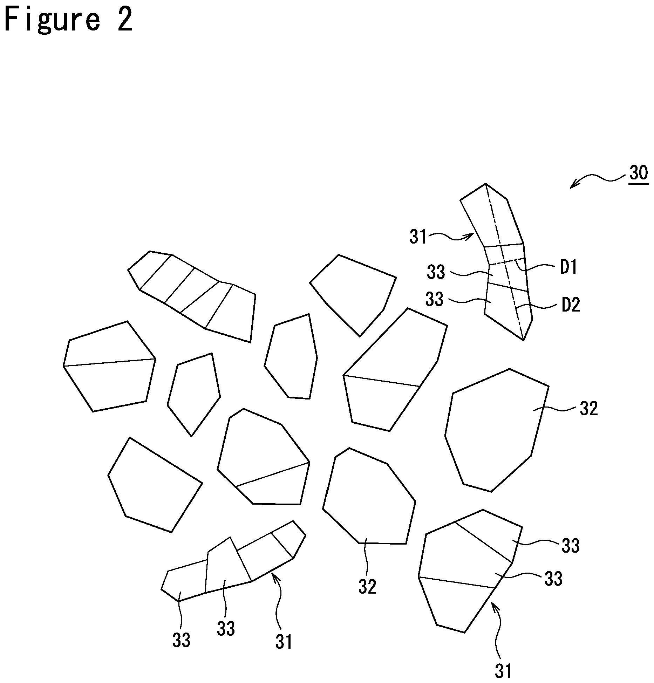

Fig. 2 is a schematic view illustrating cross sections of particles of the positive electrode active material 30 of an example of an embodiment. As illustrated in FIG. 2, the positive electrode active material 30 includes a lithium-transition metal composite oxide 31 composed of particles having a breadth D1 greater than or equal to 0.5 µm and less than or equal to 6.0 µm and having greater than or equal to two and less than or equal to ten of crystal planes 33 inside the particle. The positive electrode active material 30 further includes a second lithium-transition metal composite oxide 32 having one crystal plane 33 inside the particle. Hereinafter, the lithium-transition metal composite oxide 31 is referred to as "first composite oxide particle 31", and the lithium-transition metal composite oxide 32 is referred to as "second composite oxide particle 32". Although a detailed mechanism is unclear, using the first composite oxide particle 31 for the positive electrode 11 remarkably improve the durability of the non-aqueous electrolyte secondary battery 10.

Although even a small amount of the first composite oxide particle 31 contributes to improvement of the durability of the battery, the first composite oxide particle 31 is preferably included at greater than or equal to 1% relative to all particles constituting the positive electrode active material 30. In this case, the effect of improving the durability becomes more remarkable. A content of the first composite oxide particle 31 may be substantially 100% relative to a total number of particles of the positive electrode active material 30 with considering only the durability, but is preferably less than or equal to 50%, and more preferably less than or equal to 40% from the viewpoints of a reduction in a manufacturing cost and the like. A preferable example of the content of the first composite oxide particle 31 is greater than or equal to 5% and less than or equal to 30% on a number basis. A content of the second composite oxide particle 32 is, for example, greater than or equal to 70% and less than or equal to 95% on a number basis.

Hereinafter, the first composite oxide particle 31 will be described in detail, but in the present embodiment, the first composite oxide particle 31 and the second composite oxide particle 32 have same constitution about an outer shape of the particles and the like except that the number of the crystal planes 33 inside the particle is different.

The first composite oxide particle 31 contains at least one metal element in an amount of greater than or equal to 90 mol% relative to a total molar amount of metal elements excluding Li, the at least one metal element selected from the group consisting of Ni, Mn, Fe, and Al. The first composite oxide particle 31 may contain elements other than Li, Ni, Mn, Fe, and Al at an amount of less than or equal to 10 mol% relative to a total molar amount of elements excluding Li and O. Examples of the other elements include Co, B, Mg, Ti, V, Cr, Cu, Zn, Ga, Ca, Sr, Zr, Nb, In, Sn, Ta, W, and Si.

The first composite oxide particle 31 preferably contains Ni at greater than or equal to 30 mol% relative to the total molar amount of the metal elements excluding Li. Ni is contained at the largest amount among the metal elements constituting the first composite oxide particle 31 excluding Li. The content of Ni is more preferably greater than or equal to 50 mol%, and particularly preferably greater than or equal to 70 mol% relative to the total molar amount of the metal elements excluding Li. An upper limit value of the Ni content may be 95 mol%, but is preferably 90 mol%. A preferable example of the Ni content is greater than or equal to 50 mol% and less than or equal to 90 mol%, or greater than or equal to 70 mol% and less than or equal to 90 mol% relative to the total molar amount of the metal elements excluding Li. The Ni content within the above range facilitates attempting to higher capacity with achieving the good durability.

The first composite oxide particle 31 preferably contains Al. Although increasing a content of Ni destabilizes the structure with charge and discharge, containing Al stabilizes the crystal structure of the composite oxide, and may inhibit deterioration of the durability. It is presumed that the plurality of the crystal planes 33 present inside the particle has durability improved by relaxing stress of the crystal. The content of Al is preferably less than or equal to 10 mol%, and more preferably less than or equal to 5 mol% relative to the total molar amount of the metal elements excluding Li. A preferable example of the Al content is greater than or equal to 1 mol% and less than or equal to 10 mol%, or greater than or equal to 1 mol% and less than or equal to 5 mol% relative to the total molar amount of the metal elements excluding Li. The Al content within the above range facilitates attempting to higher capacity with achieving the good durability.

The first composite oxide particle 31 may contain at least one of Mn and Fe. When Mn or Fe is contained, each content thereof is preferably greater than or equal to 0.01 mol% and less than or equal to 70 mol%, and more preferably greater than or equal to 1 mol% and less than or equal to 50 mol% relative to the total molar amount of the metal elements excluding Li. The first composite oxide particle 31 may contain Co, but a content thereof is, for example, less than or equal to 10 mol%, and more preferably less than or equal to 5 mol% relative to the total molar amount of the metal elements excluding Li, or substantially 0% because Co is an expensive metal element.

An example of preferable lithium-transition metal composite oxides is a composite oxide represented by the composition formula Li_{α}NiₓM_{y}Al_{z}O₂, wherein 0.9 ≤ α ≤ 1.2, 0.70 ≤ x <_ 0.90, 0.01 ≤ y ≤ 0.3, 0 ≤ z ≤ 0.10, and M represents at least one metal element selected from the group consisting of cobalt, manganese, and iron.

A Li-site occupancy in the first composite oxide particle 31 is preferably greater than or equal to 80%, more preferably greater than or equal to 90%, and particularly preferably greater than or equal to 95%. The Li-site occupancy within the above range easily achieves higher capacity. The Li-site occupancy means a proportion of Li in Li sites in the crystal structure, and is determined by Rietveld analysis of an X-ray diffraction pattern of the lithium-transition metal composite oxide. The Li-site occupancy may be greater than or equal to 98% in the lithium-transition metal composite oxide including no manganese, may be greater than or equal to 94% in the lithium-transition metal composite oxide including manganese, or may be substantially 100%.

### [Proportion of Metal Elements Excluding Li in Li layer of Lithium-Transition Metal Composite Oxide]

A proportion of metal elements excluding Li present in a Li layer is determined by Rietveld analysis of an X-ray diffraction pattern obtained by X-ray diffraction measurement on the lithium-transition metal composite oxide. The X-ray diffraction pattern is obtained by a powder X-ray diffraction method by using a powder X-ray diffraction apparatus (product name "RINT-TTR", manufactured by Rigaku Corporation, radiation source Cu-Kα) under the following conditions.
Measuring Range: 15-120°
Scanning Rate: 4°/min
Analyzing Range: 30-120°
Background: B-spline
Profile Function: Split pseudo-Voigt function
Restricting Condition: Li(3a) + Ni(3a) = 1
   Ni(3a) + Ni(3b) = β (β represents each Ni content proportion)
ICSD No.: 98-009-4814

For the Rietveld analysis of the X-ray diffraction pattern, PDXL2 (manufactured by Rigaku Corporation), which is a software for Rietveld analysis, is used.

The first composite oxide particle 31 is of preferably single particles, which have no grain boundary inside the particle. That is, the first composite oxide particle 31 is composed of not secondary particles formed by aggregation of a plurality of primary particles but one primary particle. Conventionally known common positive electrode active material particles are secondary particles formed by aggregation of many primary particles, but the first composite oxide particle 31 largely differs from such secondary particles. The first composite oxide particle 31 may include secondary particles formed by aggregation of several (for example, less than ten of) primary particles. In the first composite oxide particle 31, a proportion of single particles is preferably greater than or equal to 60%, more preferably greater than or equal to 80%, and particularly preferably greater than or equal to 90%, or may be substantially 100% on a number basis.

Many of the first composite oxide particle 31 are angular particles. A cross section of the particle of the first composite oxide particle 31 has, for example, a polygonal shape including sides having a length of greater than or equal to 1.5 µm, and at least three interior angles θ of the polygon is greater than or equal to 45° and less than or equal to 160°. A length of the longest long side is, for example, greater than or equal to 3 µm and less than or equal to 20 µm, and preferably greater than or equal to 3 µm and less than or equal to 15 µm. All the interior angles θ of the polygon may be greater than or equal to 45° and less than or equal to 160°, greater than or equal to 60° and less than or equal to 150°, or greater than or equal to 70° and less than or equal to 130°, and there may be greater than or equal to three of internal angles θ of less than or equal to 90°. The first composite oxide particle 31 include, for example, the angular particles satisfying the length of the long side and the internal angles θ at greater than or equal to 50% on a number basis.

An average porosity of the first composite oxide particle 31 is preferably less than or equal to 1%, and more preferably less than or equal to 0.3%. The average porosity means an average value of proportions of pores in the first composite oxide particle 31, and is measured by a method described later. The first composite oxide particles 31, which are dense particles having few pores, may have an average porosity of less than 1%.

The average porosity of the first composite oxide particle 31 is measured by the following method.
(1) A cross section of the positive electrode mixture layer is exposed by using an ion-milling apparatus (for example, IM4000PLUS, manufactured by Hitachi High-Tech Corporation).
(2) A backscattered electron image of the exposed cross section of the positive electrode mixture layer is photographed by using a scanning electron microscope (SEM). The magnification with photographing the backscattered electron image is greater than or equal to 1000 and less than or equal to 10000.
(3) The SEM image of the cross section of the positive electrode mixture layer is imported into a computer, and color-coded into two colors with contrast by using an image analysis software. The color with lower contrast is specified as the void.
(4) Void areas of 100 particles randomly selected from the processed image are determined, and a proportion of the void area in a sectional area of the particle (porosity) is calculated and averaged.

The first composite oxide particle 31 is the particle having a breadth D1 greater than or equal to 0.5 µm and less than or equal to 6.0 µm, as noted above. The breadth D1 herein is determined by the following procedure.
(1) A length D2 of the first composite oxide particle 31 is determined. The length D2 means a length of the longest straight line among straight lines between two points on an outer circumference of the particle in the image of the cross section of the particle.
(2) A length of the shortest straight line among straight lines extending from a middle point of the length D2 (the above longest straight line) to the outer circumference of the particle and intersecting this straight line is measured. The length of this shortest straight line is the breadth D1.

An average value of the breadths D1 of the first composite oxide particles 31 is, for example, greater than or equal to 1.0 µm and less than or equal to 5.5 µm, and preferably greater than or equal to 1.5 µm and less than or equal to 5.0 µm. The average value of the breadths D1 is calculated by averaging breadths D1 of arbitrary 50 first composite oxide particles 31. The average value of the breadths D1 within the above range makes the effect of improving the durability of the battery more remarkable. The length D2 of the first composite oxide particle 31 is, for example, greater than or equal to 3 µm and less than or equal to 20 µm, and preferably greater than or equal to 3 µm and less than or equal to 15 µm. The positive electrode active material 30 may include particles having a plurality of the crystal planes 33 and having a breadth D1 out of the range of greater than or equal to 0.5 µm and less than or equal to 6.0 µm.

Inside the first composite oxide particle 31, greater than or equal to two and less than or equal to ten of the crystal planes 33 are present. The crystal plane 33 may be confirmed by observing the cross section of the particle with a scanning ion microscope (SIM). Since the SIM yields different contrast with different crystal planes, a number of the crystal planes may be counted by difference in the contrast in the observation with a magnification of 3000. The first composite oxide particle 31 having greater than or equal to two and less than or equal to ten of the crystal planes 33 inside the particle specifically improves the durability of the battery when used as the positive electrode active material 30. The number of the crystal planes 33 is preferably greater than or equal to two and less than or equal to nine, more preferably greater than or equal to two and less than or equal to seven, and particularly preferably greater than or equal to two and less than or equal to five. Among the first composite oxide particles 31, particles at greater than or equal to 1% and less than 50% on a number basis have greater than or equal to two and less than or equal to five of the crystal planes 33, for example.

Many of the crystal planes 33 may have an angular shape similar to the outer shape of the first composite oxide particle 31. A size of the crystal plane 33 depends on a size of the first composite oxide particle 31, and a relationship between sizes of crystal planes 33 included in one first composite oxide particle 31 is not particularly limited. The sizes of each crystal plane 33 may be similar to or significantly different from each other. The positive electrode active material 30 may include particles having greater than ten of the crystal planes 33.

Inside the particle of the first composite oxide particle 31, there is at least one crystal grain boundary being a boundary with the adjacent crystal plane 33. When greater than or equal to three of the crystal planes 33 are included, a plurality of crystal grain boundaries is formed in the first composite oxide particle 31. The crystal grain boundary may be a curve, but preferably formed linearly. The "linearly" herein means that a straight line between both ends of the crystal grain boundary, and the crystal grain boundary are substantially coincided. Specifically, a maximum amount of gap between: the straight line between both the ends of the crystal grain boundary; and the linearly formed crystal grain boundary is within 10% of the length of this straight line. Inside the first composite oxide particle 31, greater than or equal to 50% of all the crystal grain boundaries are linearly formed, for example.

A proportion of the length of the crystal grain boundary in the circumference length of the crystal plane 33 is preferably less than 60%. Since the crystal grain boundary is a boundary between the adjacent crystal planes 33, a region other than the crystal grain boundary in the circumference length of the crystal plane 33 is positioned on the outer circumference of the first composite oxide particle 31. In the first composite oxide particle 31, a proportion of a length of each crystal grain boundary relative to the circumference length of the first composite oxide particle 31 having the plurality of the crystal planes is less than 60%, and more preferably less than or equal to 50%, for example. That is, in the first composite oxide particle 31, there are preferably more crystal planes 33 exposed to the particle surfaces than crystal planes 33 present only inside the particle. A proportion of the first composite oxide particle 31 having a proportion of the length of each crystal grain boundary of less than 60% is desirably greater than or equal to 90%.

A lower limit value of the proportion of the length of the crystal grain boundary to the circumference length of the crystal plane 33 is not particularly limited, and 10% as an example. The first composite oxide particle 31 may include a crystal plane 33 having this proportion of greater than or equal to 60%.

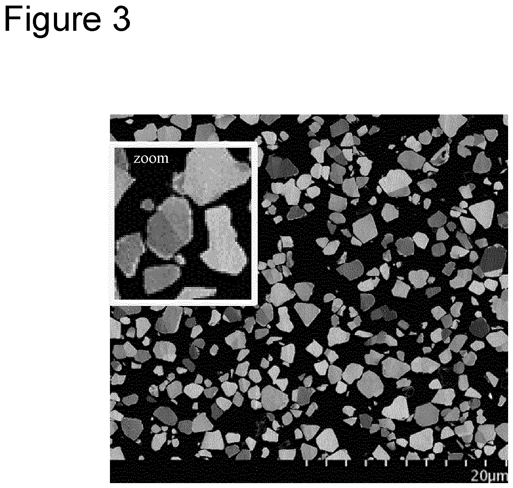

FIG. 3 is a SIM image of cross sections of particles of the positive electrode active material 30. As shown in FIG. 3, the positive electrode active material 30 includes: the first composite oxide particle 31 having greater than or equal to two and less than or equal to ten of the crystal planes 33 inside the particle; and the second composite oxide particle 32 having one crystal plane 33 inside the particle. Most of the first composite oxide particles 31 and second composite oxide particles 32 are not secondary particles formed by aggregation of a plurality of primary particles but angular single particles, which has no grain boundary in the particle. Many of the crystal grain boundaries of the first composite oxide particle 31 are linearly formed.

The positive electrode active material 30 may be synthesized by: mixing a transition metal compound containing at least Ni, an aluminum compound, and a lithium compound; firing the mixture at high temperature; and then further firing the mixture at low temperature, for example. The first firing is performed at a temperature higher than a firing temperature of a conventionally common positive electrode active material by greater than or equal to 100°C and less than or equal to 150°C. The second firing is performed at a temperature lower than the temperature of the first firing by greater than or equal to 100°C and less than or equal to 150°C, that is, at the firing temperature of the conventionally common positive electrode active material. As an example of specific firing temperatures, the temperature of the first firing is preferably greater than or equal to 720°C and less than or equal to 1000°C, the temperature of the second firing is preferably greater than or equal to 600°C and less than or equal to 800°C, and there is preferably a difference of greater than or equal to 50°C of the temperature between each of the firing steps.

A time of the first firing is preferably greater than or equal to 6 hours and less than or equal to 50 hours. A time of the second firing is preferably greater than or equal to 3 hours and less than or equal to 60 hours. An oxygen concentration in this time is preferably greater than or equal to 20% in the first firing, and preferably greater than or equal to 80% in the second firing. Reducing oxygen to the low concentration in the first firing generates structural defects in the positive electrode active material, which may fast grow the primary particles. In the first firing, reaching the target temperature from 650°C within one hour accelerates the particle growth.

The above method yields the positive electrode active material 30 including: the first composite oxide particle 31 having greater than or equal to two and less than or equal to ten of the crystal planes 33 inside the particle at greater than or equal to 5% and less than or equal to 30% on a number basis; and the second composite oxide particle 32 at greater than or equal to 70% and less than or equal to 95% on a number basis. Lengthening the firing time or raising the firing temperature tend to increase the amount of the first composite oxide particles 31. The positive electrode active material 30 may be manufactured by mixing separately synthesized first composite oxide particle 31 and second composite oxide particle 32. Reducing a particle diameter of the composite oxide being the raw material tends to decrease the breadth D1 of the first composite oxide particle 31. A so-called person skilled in the art may manufacture the first composite oxide particle 31 based on the description herein with the purpose of regulating the breadth D1 within greater than or equal to 0.5 µm and less than or equal to 6.0 µm and forming greater than or equal to two and less than or equal to ten of the crystal planes 33 inside the particle.

### [Negative Electrode]

The negative electrode 12 has a negative electrode core and a negative electrode mixture layer provided on a surface of the negative electrode core. The negative electrode core is a sheet-shaped current collector having higher conductivity than the negative electrode mixture layer. For the negative electrode core, a foil of a metal stable within a potential range of the negative electrode 12, such as copper and a copper alloy, a film in which such a metal is disposed on a surface layer thereof, and the like may be used. The negative electrode mixture layer includes a negative electrode active material and a binder, and is preferably provided on both surfaces of the negative electrode core. A thickness of the negative electrode mixture layer is larger than that of the negative electrode core, and an example thereof is greater than or equal to 50 µm and less than or equal to 150 µm on one side of the core.

The negative electrode mixture layer includes the negative electrode active material as a main component. A content percentage of the negative electrode active material is preferably greater than or equal to 90 mass% relative to a mass of the negative electrode mixture layer, and as a preferable example, greater than or equal to 90 mass% and less than or equal to 98 mass%. A content of the binder is, for example, greater than or equal to 0.5 mass% and less than or equal to 5 mass% relative to the mass of the negative electrode mixture layer. The negative electrode 12 may be produced by, for example, applying a negative electrode mixture slurry including the negative electrode active material, the binder, and the like on surfaces of the negative electrode core, and drying and subsequently compressing the coating to form the negative electrode mixture layers on both the surfaces of the negative electrode core.

The negative electrode mixture layer typically includes a carbon-based active material that reversibly absorbs and desorbs lithium ions as the negative electrode active material. A preferable carbon-based active material is a graphite such as: a natural graphite such as flake graphite, massive graphite, or amorphous graphite; or an artificial graphite such as massive artificial graphite (MAG) or graphitized mesophase-carbon microbead (MCMB). As the negative electrode active material, a Si-based active material composed of at least one of Si and a Si-containing compound may be used, or the carbon-based active material and the Si-based active material may be used in combination.

As the binder included in the negative electrode mixture layer, a fluororesin, PAN, a polyimide, an acrylic resin, a polyolefin, or the like may be used as in the case of the positive electrode 11, but styrene-butadiene rubber (SBR) is preferably used. The negative electrode mixture layer preferably further includes cellulose derivatives such as CMC or a salt thereof, polyacrylic acid (PAA) or a salt thereof, polyvinyl alcohol (PVA), or the like. The negative electrode mixture layer may include a conductive agent. As the conductive agent, conductive agents same as those applied for the positive electrode 11 may be used.

### [Separator]

For the separator 13, a porous sheet having an ion permeation property and an insulation property is used. Specific examples of the porous sheet include a fine porous thin film, a woven fabric, and a nonwoven fabric. As a material for the separator 13, a polyolefin such as polyethylene, polypropylene, or a copolymer of ethylene and an α-olefin, cellulose, or the like is preferable. The separator 13 may have any of a single-layered structure and a multi-layered structure. On a surface of the separator 13, a heat-resistant layer including inorganic particles, a heat-resistant layer composed of a highly heat-resistant resin such as an aramid resin, a polyimide, or a polyamide imide, or the like may be formed.

### EXAMPLES

Hereinafter, the present disclosure will be further described with Examples, but the present disclosure is not limited to these Examples.

### <Example 1>

### [Synthesis of Positive Electrode Active Material]

Lithium hydroxide and a nickel-cobalt-aluminum composite oxide (D50 = 5 µm) were mixed at a predetermined mass ratio, the mixture was fired at an oxygen concentration of 90% at 850°C for 6 hours (heated to 650°C for 3 hours, and from 650°C to 850°C for 30 minutes), and then the mixture was further fired at 760°C for 3 hours to obtain a lithium-transition metal composite oxide (positive electrode active material) A1 represented by the composition formula LiNi_{0.8}Co_{0.09}Al_{0.03}O₂. The positive electrode active material A1 included first composite oxide particles having a breadth D1 greater than or equal to 0.5 µm and less than or equal to 6.0 µm and having greater than or equal to two and less than or equal to ten of crystal planes inside the particle at 14% on a number basis. The remaining 86% was second composite oxide particles having one crystal plane inside the particle. Greater than or equal to 95% of the first and second composite oxides were composed of single particles. The lithium-transition metal composite oxide (positive electrode active material) A1 had a Li-site occupancy of 98.9%, and a porosity of less than 1%.

FIG. 3 shows a SIM image of cross sections of particles of the positive electrode active material A1. The first composite oxide particle had an average value of the breadths D1 of 1.4 µm, and an average value of proportions of lengths of respective grain boundaries sharing a crystal grain boundary (a length where one point intersecting an outer circumference of the particle 31 was a beginning point and the other point intersecting again the outer circumference of the particle 31 was an end point) to circumference lengths of the first composite oxide particles 31 (45 particles) was 19%. The maximum was 38%, and the minimum was 8%. In addition, greater than or equal to 60% of the crystal grain boundaries were linearly formed. An average value of breadths D1 of the second composite oxide particles was almost same as that of the first composite oxide particle.

### <Example 2>

### [Synthesis of Positive Electrode Active Material]

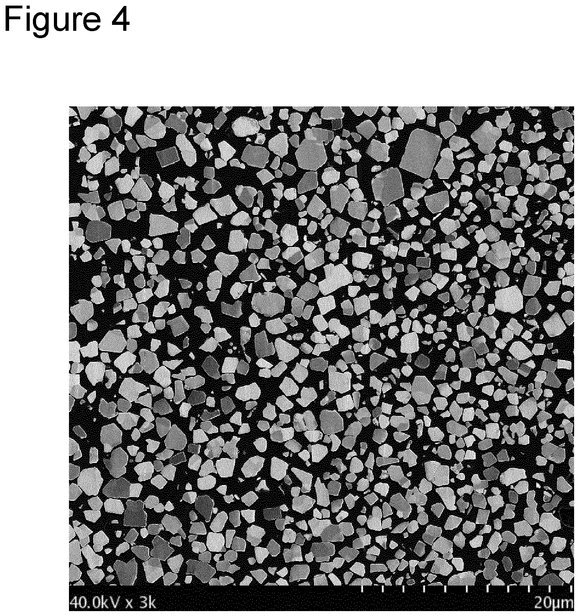

Lithium hydroxide and a nickel-cobalt-aluminum composite oxide (D50 = 5 µm) were mixed at a predetermined mass ratio, the mixture was fired at an oxygen concentration of 90% at 750°C for 30 hours (heated to 650°C for 3 hours, and from 650°C to 850°C for 30 minutes), and then the mixture was further fired at 700°C for 30 hours to obtain a lithium-transition metal composite oxide (positive electrode active material) A2 represented by the composition formula LiNi_{0.91}Co_{0.04}Al_{0.05}O₂. The positive electrode active material A2 included first composite oxide particles at 22% on a number basis. FIG. 4 shows a SIM image of cross sections of particles of the positive electrode active material A2.

### <Comparative Example 1>

### [Synthesis of Positive Electrode Active Material]

Lithium hydroxide and a nickel-cobalt-aluminum composite oxide were mixed at a predetermined mass ratio, the mixture was fired at 760°C to obtain a lithium-transition metal composite oxide (positive electrode active material) B1 represented by the composition formula LiNi_{0.91}Co_{0.04}Al_{0.05}O₂. The positive electrode active material B1 was of secondary particles formed by aggregation of many primary particles.

### [Production of Positive Electrode]

The above positive electrode active material, acetylene black, and polyvinylidene fluoride were mixed at a predetermined solid-content mass ratio, and N-methyl-2-pyrrolidone (NMP) was used as a dispersion medium to prepare a positive electrode mixture slurry. Then, the positive electrode mixture slurry was applied on a positive electrode core composed of aluminum foil, the coating was dried and compressed, and then cut to a predetermined electrode size to obtain a positive electrode.

### [Production of Negative Electrode]

Low-BET graphite, a dispersion of styrene-butadiene rubber (SBR), and sodium carboxymethylcellulose (CMC-Na) were mixed at a predetermined solid-content mass ratio, and water was used as a dispersion medium to prepare a negative electrode mixture slurry. Then, this negative electrode mixture slurry was applied on both surfaces of a negative electrode core composed of copper foil, the coating was dried and compressed, and then cut to a predetermined electrode size to produce a negative electrode in which negative electrode mixture layers were formed on both the surfaces of the negative electrode core. The low-BET graphite was of graphite particles having a volume of pores having a pore diameter of less than or equal to 2 nm per mass of less than or equal to 0.3 mm³/g, which was determined from a nitrogen-adsorption isothermal curve with a DFT method. The low-BET graphite had a specific surface area with a BET method of less than or equal to 1.5 m²/g.

### [Preparation of Non-Aqueous Electrolyte Liquid]

Ethylene carbonate (EC), ethyl methyl carbonate (EMC), and dimethyl carbonate (DMC) were mixed at a predetermined volume ratio. Into this mixed solvent, LiPF₆ was added to obtain a non-aqueous electrolyte liquid.

### [Production of Non-Aqueous Electrolyte Secondary Battery]

The above positive electrode to which a positive electrode lead made of aluminum was attached, and the above negative electrode to which a negative electrode lead made of nickel was attached were spirally wound with a separator made of polyethylene interposed therebetween, and flatly formed to produce a wound electrode assembly. This electrode assembly was housed in an exterior composed of an aluminum laminate, the above non-aqueous electrolyte liquid was injected, and then an opening of the exterior was sealed to produce a non-aqueous electrolyte secondary battery for evaluation.

### [Evaluation of Capacity Retention (Durability)]

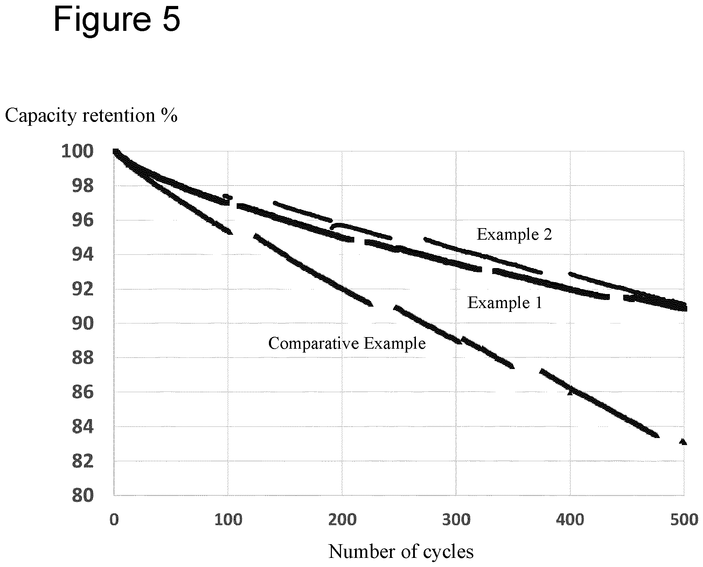

The produced battery was charged and discharged as follows with 400 cycles to calculate a capacity retention with the following formula. Table 1 shows the evaluation results. FIG. 5 shows a change in the capacity retention until the 400th cycle. Capacity retention = (Discharge capacity after 400th cycle / Initial discharge capacity) × 100

Charge-discharge condition: Under a temperature environment of 45°C, the battery was charged at a constant current of 0.5 C until a battery voltage of 4.2 V, additionally charged at 4.2 V until 0.02 C, then rested for 30 minutes, and discharged at a constant capacity of 0.5 E until the battery voltage of 2.5 V.

**[Table 1]**

| | Positive electrode active material | | | Capacity retention |
|---|---|---|---|---|
| | First composite oxide particle | Second composite oxide particle | Secondary particle | |
| A1 | 14% | 86% | - | 91% |
| A2 | 22% | 78% | - | 91% |
| B1 | - | - | 100% | 83% |

As shown in Table 1 and FIG. 5, the batteries of Examples, which use the positive electrode active material A1 or A2, all have a high capacity retention and excellent durability (cycle characteristics) compared with the battery of Comparative Example 1, which uses the positive electrode active material B1. Since the positive electrode active materials A1 and A2 approximately only have a difference in the existence ratio of the first and second composite oxide particles, it is found form this result that using the positive electrode active material having the crystal planes whose number was regulated to greater than or equal to two and less than or equal to ten inside the particle remarkably contributes to improvement of the durability of the battery.

### REFERENCE SIGNS LIST

10 non-aqueous electrolyte secondary battery, 11 positive electrode, 12 negative electrode, 13 separator, 14 electrode assembly, 16 exterior housing can, 17 sealing assembly, 18, 19 insulating plate, 20 positive electrode lead, 21 negative electrode lead, 22 grooved portion, 23 internal terminal plate, 24 lower vent member, 25 insulating member, 26 upper vent member, 27 cap, 28 gasket, 30 positive electrode active material, 31 first composite oxide particle (lithium-transition metal composite oxide), 32 second composite oxide particle (second lithium-transition metal composite oxide), 33 crystal plane, D1 breadth, D2 length

## Claims

1. A positive electrode active material for a non-aqueous electrolyte secondary battery, including a lithium-transition metal composite oxide containing at least one metal element in an amount of greater than or equal to 90 mol% relative to a total molar amount of metal elements excluding Li, the at least one metal element selected from the group consisting of Ni, Mn, Fe, and Al, wherein
the lithium-transition metal composite oxide is composed of particles having a breadth greater than or equal to 0.5 µm and less than or equal to 6.0 µm, and
the lithium-transition metal composite oxide has greater than or equal to two and less than or equal to ten of crystal planes inside the particle.

2. The positive electrode active material according to claim 1, wherein the lithium-transition metal composite oxide is composed of single particles.

3. The positive electrode active material according to claim 1 or 2, further including a second lithium-transition metal composite oxide having one crystal plane inside a particle thereof, wherein a content of the lithium-transition metal composite oxide is greater than or equal to 5% and less than or equal to 30% relative to a total number of particles of the positive electrode active material.

4. The positive electrode active material according to any one of claims 1 to 3, wherein a proportion of a length of a crystal grain boundary being a boundary with the adjacent crystal plane to a circumference length of the crystal plane is less than 60%.

5. The positive electrode active material according to claim 4, wherein the crystal grain boundary is linearly formed.

6. A non-aqueous electrolyte secondary battery, comprising:
a positive electrode including the positive electrode active material according to any one of claims 1 to 5;
a negative electrode; and
a non-aqueous electrolyte.
